# EUROPEAN PATENT SPECIFICATION

(11) **EP 1 787 956 B1**
(45) Date of publication and mention of the grant of the patent: **29.10.2014**
(21) Application number: 05768474.8
(22) Date of filing: 04.08.2005
(51) Int. Cl.: C01B 31/02, B29C 33/60, B29C 33/68, B29C 43/36, C23C 24/08

(54) **Method of moulding**
Formungsverfahren
Procédé de moulage

(30) Priority: 16.08.2004 JP 2004236715
(43) Date of publication of application: 23.05.2007
(73) Proprietor: MEC International Co., Ltd., Toyota-shi Aichi-ken 4710047 (JP); TOYOTA JIDOSHA KABUSHIKI KAISHA, Toyota-shi, Aichi-ken, 471-8571 (JP)
(72) Inventor: MATSUO, Takeshi c/o FRONTIER CARBON CORPORATION, Kanagawa 2278502 (JP); SUZUKI, Mitsuo c/o FRONTIER CARBON CORPORATION, Kanagawa 2278502 (JP); NIINOMI, Takaaki c/o FRONTIER CARBON CORPORATION, Kanagawa 2278502 (JP); HAYAKAWA, Setsuyu c/o MEC International Co., Ltd., Toyota-shi, Aichi-ken, 4710047 (JP); FURUKAWA, Yuichi c/o Toyota Jidosha Kabushiki Kaisha, Aichi-ken, 4718571 (JP)
(74) Representative: HOFFMANN EITLE
(86) International application number: PCT/JP2005/014309
(87) International publication number: WO 2006/018980

(56) References cited:
- JP-A- 08 034 951
- JP-A- 08 073 797
- JP-A- 08 073 798
- JP-A- 11 292 629
- JP-A- 2002 524 376
- JP-A- 2003 239 099
- JP-A- 2005 144 751
- KURODA M. ET AL: 'Die Casting-yo Funtai Rigata Junkatsuzai no Tokusei ni Oyobosu Sosei no Eikyo' REPORTS OF CHUGOKU NATIONAL INDUSTRIAL RESEARCH INSTITUTE no. 55, 24 November 2000, pages 13 - 17, XP002997799

## Description

### TECHNICAL FIELD

The present invention relates to a method of moulding, and more particularly, to such a method which makes use of a mould release film mainly comprising fullerenes.

### BACKGROUND ART

Fullerenes are in the form of a molecular crystal made of carbon solely whose molecule is of a spherical shape or a Rugby ball shape having a size of about 1 nm, and are expected to exhibit a good lubricating performance.

Meanwhile, it is conventionally known that a film of the fullerenes is formed by a vacuum deposition method. However, the vacuum deposition method requires a special vacuum equipment, thereby failing to provide a simple film-forming method. On the other hand, although a spin-coating method is a relatively simple film-forming method, this method is hardly applicable to formation of a film made of fullerenes at the present time owing to the lack of an adequate solvent therefor.

Therefore, notwithstanding the fullerenes are expected to show a lubricating performance, the fullerenes have not been presently used in an industrial scale owing to difficulty in forming a film thereof.

Meanwhile, lines drawn by a pencil are formed by rubbing a surface of a paper with a lead of the pencil. The obtained line drawing is considered to be a film made of the pencil lead material in a broad sense. Conventionally, there has been proposed a baked pencil lead containing fullerenes which is a high-temperature heat-treated type pencil lead using an inorganic filler (for example, refer to Japanese Patent No. 3373302).

The above proposal is based on such a finding that the baked pencil lead can be improved in smoothness by adding fullerenes thereto. However, the amount of the fullerenes added is as small as not more than 0.1% by weight on the basis of the total amount of the based pencil lead. Therefore, the line drawing formed by the baked pencil lead is not considered to be a film substantially made of fullerenes.

WO-A-0015548 discloses sintered fullerene-based products of different shapes.

### DISCLOSURE OF THE INVENTION

### PROBLEM TO BE SOLVED BY THE INVENTION

The present invention has been made in view of the above conventional problems.

An object of the present invention is to provide a method of moulding using a mould release film containing fullerenes as a main component.

### MEANS FOR SOLVING PROBLEMS

As a result of the present inventors' earnest study, it has been found that fullerenes are readily molded by themselves, and the resultant molded product has a strength sufficient to form a film made of fullerenes when rubbing a surface of an object therewith to attach it thereon, and further that the fullerenes exhibit an excellent releasing performance. The present invention has been attained on the basis of the above finding. The aspects of the present invention are as follows.

According to the present invention, there is provided a method of moulding comprising:
forming a mould release film on a surface of a metal mould by rubbing a moulded product (M) containing not less than 30% by weight of fullerenes on the surface,
moulding a product (P) in the mould, and
separating the metal mould and the moulded product (P) from each other.

Preferably the moulded product (M) has a bar shape.

### BRIEF DESCRIPTION OF THE DRAWINGS

Fig. 1 is a microphotograph as a drawing showing a surface of a coating film formed in Example 3.
Fig. 2 is a microphotograph as a drawing showing a surface of a coating film formed in Comparative Example 2.

### PREFERRED EMBODIMENTS FOR CARRYING OUT THE INVENTION

The present invention is described in detail below. The following preferred embodiments of the present invention are only illustrative and not intended to limit the scope of the present invention. Various changes and modifications will be made unless departing from the subject matter of the present invention.

First, the fullerenes used in the present invention are explained. The "fullerenes" used herein mean those substances having a fullerene skeleton, and include not only fullerene but also fullerene derivatives. In particular, among these substances, from the standpoints of good releasability and lubricating property, preferred is fullerene having a low bulkiness. However, fullerene polymers having a large size whose fullerene skeleton is partially damaged are excluded from the fullerenes used in the present invention. The fullerene is a carbon cluster having a closed shell structure. The number of carbon atoms contained in the fullerene is an even number of usually 60 to 130. Specific examples of the fullerenes may include C₆₀, C₇₀, C₇₆, C₇₈, C₈₂, C₈₄, C₉₀, C₉₄, C₉₆ and higher-order carbon clusters containing a larger number of carbon atoms. Examples of the fullerene derivatives may include those fullerenes containing substituent groups bonded to the fullerene skeleton, those fullerenes containing metal atoms or compounds enclosed in the fullerene skeleton, and complexes of fullerene with other metal atoms or compounds. The substituent groups, metal atoms and compounds contained in the fullerene derivatives are not particularly limited unless they adversely affect the excellent effects of the film-forming product according to the present invention. From the standpoints of good releasability and lubricating property, the substituent groups, metal atoms and compounds preferably have a low bulkiness, and are more preferably those capable of improving a releasability and a lubricating property of the resultant film-forming product. In the present invention, the fullerene skeleton contained in the fullerenes is preferably a C₆₀ skeleton which is readily produced and has a shape close to a sphere. When using a mixture of different kinds of fullerenes, the content of the C₆₀ skeleton in the mixture is preferably not less than 50% by weight, and the content of the C₇₀ skeleton in the mixture is preferably not more than 30% by weight.

Next, the moulded product for use in the present invention is described. The content of the fullerenes in the moulded product is preferably as large as possible. More specifically, the content of the fullerenes in the moulded product is not less than 30% by weight, preferably not less than 50% by weight, more preferably not less than 80% by weight and still more preferably not less than 90% by weight. Further, the moulded product may be produced such that the content of the fullerenes therein is 100% by weight. When the content of the fullerenes in the moulded product is too small, a film formed by using the moulded product tends to contain a too large amount of substances other than the fullerenes, thereby failing to exhibit a sufficient performance of the fullerenes such as a good lubricating property. As the molding raw materials other than the fullerenes, there may be used molding assistants such as the below-mentioned binders.

The shape of the molded product is not particularly limited unless the excellent effects of the film-forming product of the present invention are damaged to a considerable extent. Examples of the shape of the molded product may include a bar shape, a spherical shape, a conical shape, a pyramidal shape, and various other shapes such as an amorphous shape having irregularities with which the product is easily graspable. Among these shapes, the bar shape is preferable from the standpoint of good followability even to irregularities on an object upon forming a film thereon by rubbing a surface of the object with the film-forming product to attach it thereon. The sectional shape of the bar-shaped molded product is not particularly limited, and may include, for example, a circular shape, a triangular shape, a rectangular shape, a hexagonal shape, etc. The bar-shaped molded product usually has a diameter of 0.1 to 10 mm, a length of 10 to 500 mm and an aspect ratio of 1 to 1000. In order to enhance a workability upon forming a film by rubbing a surface of the object with the film-forming product to attach it thereon and protect a peripheral portion of the product, the moulded product may be covered or sheathed with wood, paper, plastics, etc., for example, except for a part of a tip end portion thereof. Further, the molded product may be formed, for example, into a pencil lead shape, and fitted into a device such as a propelling pencil to allow the product to be used as a writing utensil. As the method for forming a mould release film, there may be used the method of rubbing a surface of the mould with the molded product to attach it thereon, which is fitted to a tip of a high-speed rotating electric jig.

As the molding method for obtaining the above molded product and conditions thereof, there may be used any suitable molding methods and conditions as long as the moulded product can be produced thereby. Examples of the molding method may include various molding methods such as a compression-molding method, an extrusion-molding method and an injection-molding method. The molding pressure used in the molding method is usually 0.005 to 10 ton/cm² and preferably 0.1 to 10 ton/cm²; and the molding (pressing) time used therein is usually 1 to 5 min. When the molding pressure is too high or the molding time is too long, the fullerene skeleton tends to be broken.

When the molding pressure is too low or the molding time is too short, the molding method may fail to be sufficiently performed. The atmosphere used upon pressing is such an atmosphere in which the fullerene skeleton is free from breakage due to reaction of the fullerenes, and an atmospheric air is usually sufficient for obtaining the molded product. Also, if required, the molding procedure may be conducted under heating or evacuation.

In addition, upon the molding, in order to enhance a moldability and a stability of the obtained molded product, the molding raw material may be uniformly blended with a molding assistant, a binder, a lubricant and a filler.

Examples of the molding assistant may include polyvinyl alcohol, synthetic waxes, liquid paraffins, animal fats and oils, synthetic resins, waxes, talc, waxes, glues, etc.

Examples of the binder may include cellulose derivatives such as nitrocellulose (pyroxylin), ethyl cellulose, methyl cellulose, cellulose acetate, carboxymethyl cellulose and hydroxyethyl cellulose; thermoplastic resins such as polystyrene, polyethylene, polypropylene, polybutene, polybutadiene, polymethylpentene, polystyrene butadiene, polyvinyl chloride, polyvinyl acetate, polymethyl acrylate, polymethyl methacrylate, polyvinylidene chloride, polytetrafluoroethylene, acryl-styrene resins, acrylonitrile-butadiene-styrene resins, ethylene-tetrafluoroethylene copolymers, polyethylene glycol, polypropylene glycol, polyacrylamide, polyacrylic acid, polyvinyl alcohol, polyvinyl pyrrolidone, polyvinyl ether, maleic acid polymers, polyester polyol resins, polyester polyether resins, polyethylene terephthalate and polybutylene terephthalate; thermosetting resins such as phenol resins and epoxy resins; natural rubbers; and synthetic rubbers such as SBR. These binders may be used in combination of any two or more thereof.

Examples of the lubricant may include abrasion resistance-imparting materials, e.g., natural waxes such as carnauba wax, beeswax and haze wax; synthetic waxes such as polyethylene wax, montan wax, paraffin wax, zinc stearyl ketone and microcrystalline wax; and stearic acid and various stearic acid-based metal soaps such as aluminum stearate, magnesium stearate and calcium stearate. These lubricants may be used in combination of any two or more thereof.

Examples of the filler may include talc, mica, kaolin clay, bentonite, various metal salts of N-ε-lauroyl lysine and N-lauroyl-β-alanine, calcium carbonate, magnesium carbonate, magnesium sulfate, boron nitride, potassium titanate whisker, calcium carbonate whisker, titanium dioxide whisker, magnesium sulfate whisker, calcium sulfate whisker and aluminum sulfate whisker. These fillers may be used in combination of any two or more thereof.

Meanwhile, amine-based compounds tend to be reacted with the fullerenes to form polymers thereof, resulting in deteriorated lubricating property of the fullerenes. In addition to the above components, any suitable solvent may be used upon molding.

When it is required to dry the molded product under heating to remove the binder or solvent therefrom, the drying under heating may be conducted at such a temperature that the fullerenes are free from reaction thereof and, therefore, the fullerene skeleton thereof suffers from no breakage. For example, under a vacuum condition, the heat-drying temperature is usually not higher than 200°C. More specifically, when the molded product is heated at a high temperature in an oxygen-containing atmosphere, the fullerenes tend to be oxidized. Also, when the molded product is heated at a high temperature such as not lower than 700°C, the fullerenes tend to be reacted with each other even under an inert atmosphere to form polymers thereof, resulting in deteriorated properties of the fullerenes such as poor lubricating property.

The moulded product used in the method of the present invention can be readily handled as compared to those products in the form of particles or a dispersion. Further, the mould release film can be formed only by such an easy work of rubbing a surface of a metal mould with the moulded product.

Next, the method of using the moulded product is described. A mould release film is formed by rubbing a surface of a metal mould with the moulded product. The "film" formed by this method means, for example, a "coating film" for protecting a surface of the metal mould. Since the fullerenes are in the form of a fine molecular crystal, fine irregularities being present on the surface of the metal mould can be filled therewith. In addition, the thus formed mould release film tends to be hardly removed (hardly wiped off). Also, the fullerenes contain a five-membered ring within a molecule thereof and, therefore, exhibit a high reactivity. Therefore, under a high temperature such as not lower than 200°C, the fullerenes tend to be reacted with the surface of the metal mould, or tends to be reacted with each other to form a rigid film such as an amorphous carbon film, so that the resultant film is more hardly peeled off from the surface of the metal mould. As a result, it is considered that the obtained film can also be further improved in durability. In addition, the fullerenes are in the form of a molecule constituted from carbon atoms only and, therefore, have advantages such as a less amount of heat-decomposed gases generated under a high temperature condition as compared to other organic substances.

On the other hand, graphite ordinarily used as a mold release agent is in the form of a layered crystal having a cleavage property and, therefore, exhibits no plastic deformation property. For this reason, when rubbing a surface of an object with graphite to attach it thereon, the graphite is simply placed on the surface of the object and may fail to be filled into irregularities present thereon only by such a rubbing procedure, resulting in poor adhesion thereto. Further, the graphite is very stable and has no reactivity, so that a film produced therefrom tends to be readily peeled off from the surface of the object.

As is apparent from the above descriptions, in the case where the moulded product of the present invention is used to form a mold releasing film on the surface of a metal mold, it is considered that the obtained film becomes more rigid owing to frictional heat generated upon molding, resulting in excellent mold releasing effect. In particular, when the metal mold is heated, or when a material to be molded within the metal mold has a high temperature and the metal mold temperature is about 200 to 500°C, the mold releasing effect can be further enhanced.

The method of the present invention forms a mold releasing film on a surface of a metal mold upon molding metals, plastics or ceramics.

In particular, examples of the suitable applications as mold release agent may include powder metallurgy of iron, copper, stainless steel, nonferrous metals, etc.; plastic working such as forging, rolling, pressing and drawing of steel, stainless steel, titanium, etc. at hot, warm and cold stages; die casting of aluminum, magnesium, zinc alloys, copper alloys, etc.; casting such as metal mold casting and low-pressure casting; injection-molding and compression-molding of various plastics, or the like. Among these applications, more preferred is the die casting performed at a metal mold temperature of 200 to 500°C.

The thin film of the fullerenes has a blackish brown color.

The thickness of the film formed may be appropriately determined depending upon the applications thereof, and is generally in the range of from several hundred nanometers to several hundred micrometers. The size (adhesion area) of the film is not particularly limited as long as the excellent effects of the present invention can be attained. It is preferred that the mould release film is uniformly formed over a whole area of a contact surface with a mold. Further, the film may be locally formed on specific portions of a metal mold.

Next, the mold release film is described. The mold release film is characterized by containing fullerenes. The "mold release film" used herein means those used for separating a metal mold and a molded product from each other, and includes such a concept covering a mold coating agent applied to a metal mold.

### EXAMPLES:

The present invention is described in more detail by the following Examples, but the Examples are only illustrative and not intended to limit the scope of the present invention.

### Example 1:

### <Production of moulded product (M)>

As the molding raw material, there was used only a mixture of fullerenes composed of 61% by weight of C₆₀, 25% by weight of C₇₀ and 14% by weight of other fullerenes having higher molecular weights without adding any molding assistants thereto. Using a pressure-molding machine, the molding raw material was molded into a bar-shaped product having a length of 5 mm, a width of 5 mm and a height of 30 mm, thereby producing a moulded product (M). The molding conditions were as follows: molding atmosphere: air; molding temperature: ordinary temperature; molding pressure: 350 kg/cm²; pressing time: 3 min.

### <Mold releasability test>

A powder of partially stabilized zirconia (97 mol% of ZrO₂ and 3 mol% of Y₂O₃) was compression-molded under a pressure of 1850 kg/cm² to form a cylindrical molded product (P) having a diameter of 1 cm and a height of 1 cm. Upon the molding, the above-produced moulded product (M) was rubbed by hand over a whole surface of a metal mold (made of an alloy tool steel "SKD11"), and an excessive amount of the moulded product (M) applied was wiped off to form a uniform fullerene film thereon. As a result, it was confirmed that the molded product (P) was taken out of the mold with a very good releasability without adhesion to the mold and breakage thereof. On the other hand, when no fullerene film was formed on the surface of the metal mold, the obtained molded product (P) suffered from adhesion to the metal mold upon taking the molded product (P) out of the metal mold, and it was therefore difficult to release the molded product (P) from the metal mold.

### Example 2:

The same procedure as defined in Example 1 was conducted except that an alumina powder was molded in the mold releasability test. It was confirmed that in the mold releasability test, the molded product (P) was taken out of the mold with a very good releasability without adhesion to the mold and breakage thereof. On the other hand, when no fullerene film was formed on the surface of the metal mold, the molded product (P) suffered from adhesion to the metal mold upon taking the molded product (P) out of the metal mold, and it was therefore difficult to release the molded product (P) from the metal mold.

### Comparative Example 1:

The same procedure as defined in Example 1 was conducted except that a graphite powder was used as the molding raw material upon forming the moulded product (M). However, the graphite powder as the raw material was deteriorated in moldability and, therefore, failed to provide a suitable molded product. Further, the same procedure as described above was conducted except for using a molding raw material made of a graphite powder containing 10% by weight of polyvinyl alcohol as a molding assistant. However, the results was the same as that using the above graphite powder containing no molding assistant.

### Example 3:

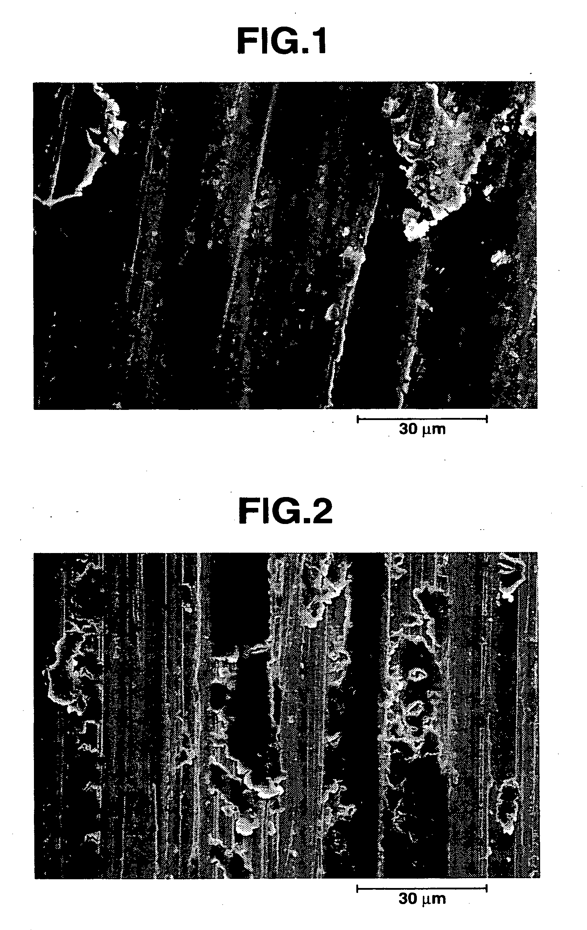

A pencil lead-shaped product having the below-mentioned composition and a diameter of 2 mm which was obtained by an ordinary extrusion-molding method was inserted into a pencil lead holder, thereby obtaining a film-forming product. The thus obtained film-forming product was rubbed over a whole surface of an alloy tool steel (SKD) so as to form a uniform coating film thereon when visually observed. A surface of the resultant coating film was observed by an electron microscope (x 1,000). As a result, it was confirmed that a fullerene film was formed over an entire surface of the SKD as shown in Fig. 1. Specifically, in Fig. 1, abrasion flaws present on the surface of the SKD were covered with the coating film and, therefore, were observed merely vaguely. Meanwhile, island-like portions observed on right and left upper sides of Fig. 1 were such portions where the fullerene film having a large thickness was formed. The difference in tone between portions other than the island-like portions in Fig. 1 was due to the difference in thickness of the coating film formed.

**Table 1: Composition of a molded product containing fullerenes**

| Components | Content (wt%) |
|---|---|
| Mixed fullerene (produced by Frontier Carbon Corporation) | 42 |
| Talc | 21 |
| Metal soap | 14 |
| Natural wax | 7 |
| Nitrocellulose | 16 |

### Comparative Example 2:

The same procedure as defined in Example 3 was conducted except that a graphite powder was used in place of the mixed fullerene, thereby producing a film-forming product. The thus obtained film-forming product was rubbed over a whole surface of the SKD so as to form a uniform coating film thereon when visually observed. A surface of the coating film was observed by an electron microscope (x 1,000). As a result, it was confirmed that graphite was adhered to the SKD only partially, and many portions of the SKD remained in an uncoated state as shown in Fig. 2. Specifically, in Fig. 2, a plurality of vertically formed island-like portions were such portions where the graphite coating film having a large thickness was formed, whereas portions other than the island-like portions were graphite-uncoated portions. In the graphite-uncoated portions, abrasion flaws present on the surface of the SKD were clearly observed. The area ratio of the graphite-uncoated portions was about 60%.

## Claims

1. A method of moulding comprising:
forming a mould release film on a surface of a metal mould by rubbing a moulded product (M) containing not less than 30% by weight of fullerenes on the surface,
moulding a product (P) in the mould, and
separating the metal mould and the moulded product (P) from each other.

2. A method according to Claim 1, wherein the moulded product (M) has a bar shape.

## Patentansprüche

1. Formgebungsverfahren, umfassend:
Bilden eines Formtrennfilms auf einer Oberfläche einer Metallform, indem ein geformtes Produkt (M), das nicht weniger als 30 Gew.% Fullerene enthält, an der Oberfläche gerieben wird,
Formen eines Produkts (P) in der Form, und
Trennen der Metallform und des geformten Produkts (P) voneinander.

2. Formgebungsverfahren nach Anspruch 1, bei dem das geformte Produkt (M) stabförmig ist.

## Revendications

1. Procédé de moulage comprenant :
former un film de démoulage sur une surface d'un moule en métal en frottant un produit moulé (M) contenant pas moins de 30% en poids de fullerènes sur la surface,
mouler un produit (P) dans le moule, et
séparer le moule en métal et le produit moulé (P) l'un de l'autre.

2. Procédé selon la revendication 1, dans lequel le produit moulé (M) a une forme de barre.
